# EUROPEAN PATENT APPLICATION

(11) **EP 3 459 645 A1**
(43) Date of publication of application: **27.03.2019**
(21) Application number: 18192549.6
(22) Date of filing: 18.10.2007
(51) Int. Cl.: B05D 3/00, C23C 24/08

(54) **METHOD FOR MAKING COATINGS USING ULTRASONIC SPRAY DEPOSITION**

(30) Priority: 19.10.2006 US 852863 P
(62) Divisional of application: 07852841.1
(71) Applicant: NanoMech, Inc., Fayetteville, AR 72701 (US)
(72) Inventor: JIANG, Wenping, Fayetteville, AR 72703 (US); LOWREY, Justin B., Fayetteville, AR 72703 (US); FINK, Robert T., Fayetteville, AR 72704 (US)
(74) Representative: Williams Powell

(57) **Abstract**

Ultrasonic spray deposition (USD) used to deposit a base layer on the substrate, followed by chemical vapor infiltration (CVI) to introduce a binder phase that creates a composite coating with good adherence of the binder to the initial phase particles and adherence of the composite coating to the substrate, is disclosed. We have used this process to create coatings consisting of cubic boron nitride (cBN), deposited using USD, and titanium nitride (TiN) applied using CVI in various embodiments. This process can be used with many materials not usable with other processes, including nitrides, carbides, carbonitrides, borides, oxides, sulphides and silicides. In addition, other binding or post-deposition treatment processes can be applied as alternatives to CVI, depending on the substrate, the coating materials, and the application requirements of the coating. Coatings can be applied to a variety of substrates including those with complex geometries. The application also describes apparatus or equipment designs used to perform ultrasonic spray deposition.

## Description

This application claims priority from U.S. provisional patent application serial number 60/852,863, entitled "Methods and Apparatus for Making Coatings Using Ultrasonic Spray Deposition," and filed on October 19, 2006.

### Background of the Invention

The present invention relates to methods and apparatus for making coatings and articles from various material compositions involving use of ultrasonic spray as the core method of coating deposition. Ultrasonic spray deposition produces coatings that are more dense, more uniform, and thinner than coatings produced using other methods. These coatings may be used for a variety of applications, including for example coatings for cutting tools where toughness and wear resistance are important and thing coatings are necessary, coatings for biomedical implants, and other applications where thin and niform coatings are needed.

### Summary of the Invention

In one embodiment of the present invention, ultrasonic spray deposition (USD) is used to deposit a base layer on the substrate, followed by chemical vapor infiltration (CVI) to introduce a binder phase that creates a composite coating with good adherence of the binder to the initial phase particles and adherence of the composite coating to the substrate. U.S. Pat. No. 6,607,782 issued August 19, 2003 to Ajay P. Malshe, et al., disclosed a method that used electrostatic spray coating (ESC) to deposit the initial base layer, followed by CVI as the second step. The present invention, which uses USD followed by CVI as one embodiment, provides important advantages over the previously disclosed method, including:
- Ability to produce more dense coatings - when the particles are dispersed in a liquid and sprayed using USD, with subsequent evaporation of the liquid, we have found that a much higher density of particles can be deposited on the substrate as compared to dry powder ESC;
- Greater uniformity and reduced surface roughness of the coatings - because nanoparticles dispersed in a properly-chosen liquid have a much reduced tendency to agglomerate, and because the USD process creates very small droplets of liquid dispersion that evaporate quickly during and following deposition, we found that the resulting coating exhibits much less agglomeration, and thus surface smoothness and uniformity of the coating are greatly enhanced;

- Ability to deposit thinner uniform coatings - with dry powder ESC, the minimum coating thickness tends to be in the range of 10 microns, while USD can produce uniform coatings that are as thin as one micron; and
- Ability to coat substrates that are not conductive (ESC requires that the surface of the substrate have a certain level of electrical conductivity - USD does not).

We have used this process to create coatings consisting of cubic boron nitride (cBN), deposited using USD, and titanium nitride (TiN) applied using CVI in various embodiments. This process can be used with many materials not usable with other processes, including nitrides, carbides, carbonitrides, borides, oxides, sulphides and silicides.

In addition, other binding or post-deposition treatment processes can be applied as alternatives to CVI, depending on the substrate, the coating materials, and the application requirements of the coating, in various embodiments. This invention is directed in various embodiments to multiple methods for creating coatings, comprised of a single material or multiple materials in combination, using USD as the process for initial deposition of a base or green coating. Coatings can be applied to a variety of substrates including those with complex geometries. The application also describes apparatus or equipment designs used to perform ultrasonic spray deposition.

### Brief Description of the Drawings

Figure 1 illustrates the two-step coating process according to a preferred embodiment of the present invention, including an initial deposition of a base- or green-coating layer, followed by a post-deposition treatment step.
Figure 2 shows the case in which a pre-deposition treatment is applied to the coating materials prior to deposition.
Figure 3 illustrates an ultrasonic spray deposition process.
Figure 4 shows ultrasonic spray deposition in combination with electrostatic charging.
Figure 5 illustrates an ultrasonic tank used in feeding coating materials dispersed in a liquid to the ultrasonic deposition system.
Figure 6 shows the deposition chamber used to contain the materials being deposited, preventing unacceptable release to the environment, allow for adjustment of spray nozzle to substrate distance, and capture and recycle unused coating materials.
Figure 7 illustrates a rotating stage used to ensure uniform deposition of the coating on the substrate.
Figure 8 shows the integrated ultrasonic spray deposition system including the ultrasonic pressure delivery system, and the deposition system including the chamber.

### Detailed Description of the Preferred Embodiments

Disclosed herein are methods and apparatus for producing a coating on a substrate, beginning with ultrasonic spray deposition to deposit a base coating layer.

### Two-Step Coating Processes - Overview

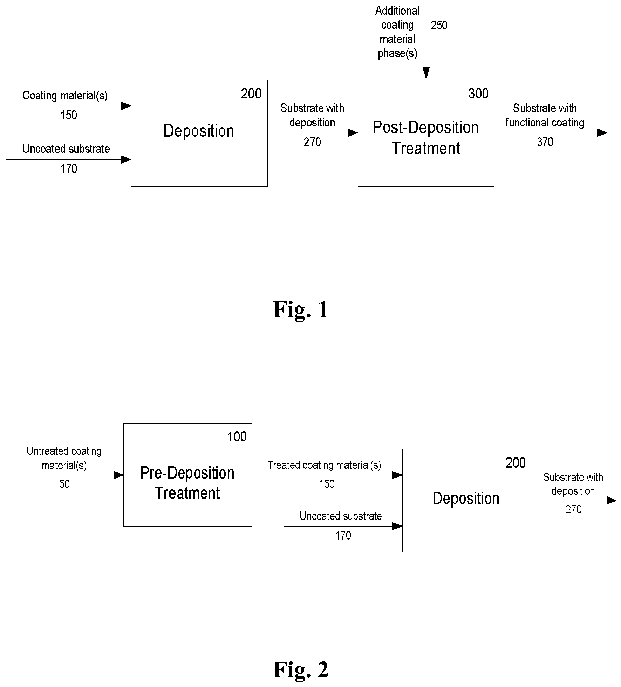

Figure 1 illustrates a two-step process for producing a coating on a substrate. The substrate 170 is placed in a deposition system 200. One or more coating materials 150 are introduced into the deposition system 200. These coating materials may be in dry powder or liquid suspension form, and may contain nano- or micro-sized particles or a combination of the two. Multiple materials may be combined together or introduced separately into the deposition system 200. A variety of materials can be used, including nitrides, carbides, carbonitrides, borides, oxides, sulphides and silicides.

The deposition system 200 may use any of several methods to produce an initial coating or base layer on the substrate. One such deposition method is ultrasonic spray deposition (USD), described further below.

After the initial deposition step, dry solid particles of the coating material(s) are in contact with the substrate. The substrate with deposition 270 is the output of the deposition step 200 as illustrated in Figure 1.

The substrate 270 with deposition of a base layer then undergoes a post-deposition treatment step 300. Post-deposition treatment is used to bind the deposited dry particles to one another and to the substrate. Suitable treatment methods include:
- Chemical vapor infiltration (CVI), which is similar to chemical vapor deposition (CVD) but using a slower reaction rate such that the binder infiltrates the porous dry powder deposition, coming into contact with both the substrate and the dry particles
- Sintering, using any of several alternative sintering methods, singly or in combination, including:
   ∘ Microwave sintering
   ∘ Laser sintering
   ∘ Infrared sintering

Each of these methods applies one or more short bursts of high energy (microwave, laser, infrared, or high temperature and high pressure) to sinter the particles of the initial coating deposition, binding them to each other and to the substrate. These methods can allow binding of the green coating to the substrate with less exposure of the substrate to high temperatures for long periods of time.

Another binding method is use of high temperature - high pressure (HT-HP), a process that is currently used for a variety of purposes including fabrication of polycrystalline cubic boron nitride (PCBN) solid compacts. In this invention, HT-HP is used as a post-deposition binding step to bind the deposited particles to each other and to the substrate.

In some embodiments, an additional treatment step (not shown in the figures) is applied after the post-deposition treatment step 300, to add an additional phase to the coating. One example of this is the use of electrostatic spray coating or ultrasonic spray deposition as a final step, after deposition and sintering of a base coating, for the purpose of applying active biological agents to the base coating. As a more specific example, a dental implant or other biomedical device, possibly with a porous surface layer, can be coated using ESC or USD followed by microwave sintering of the base coating. Then in an additional post-sintering deposition step, an active agent can be applied, such as a biocidal or anti-bacterial agent, other active agents such as bone-morphogenic proteins, or particles carrying drugs for drug delivery at the surface of the device after implantation. These are just examples of how a post-processing step can be used to apply additional components to a base coating for specific purposes.

Other additional treatment steps (not shown in the figures) that can be applied after post-deposition treatment 300 can be used to enhance the binding of the coating and to reduce or eliminate defects and non-uniformities in the coating. For example, suitable treatments for hard coatings such as those used for cutting tools include high temperature - high pressure (HT-HP) and infrared sintering (pulsed infrared radiation). Other methods using transient energy sources also may be used to enhance the characteristics of the final coating on the substrate.

As shown in Figure 2, some embodiments of the invention include an optional pre-deposition treatment step 100. Untreated coating materials 50 are treated prior to being passed as treated coating materials 150 to the deposition system 200. For example, particles of coating material may be pre-treated for the purpose of functionalization (providing specific functionality desired for a specific application), or over-coating of particles for any of a number of purposes (e.g., protection of particles from high temperatures involved in the coating process).

### Methods and Apparatus for Coating Deposition

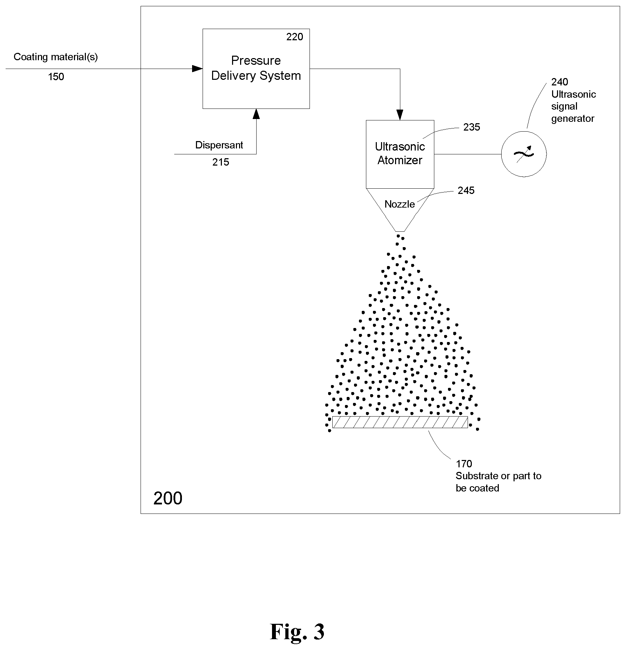

Figure 3 illustrates a method of deposition 200 that uses ultrasonic atomization and spray of a liquid dispersion to deposit materials on a substrate. Coating materials 150, which may optionally have been pre-treated as discussed above, are introduced to a pressure delivery system 220. A dispersant 215 also is introduced to the pressure delivery system, in which the coating materials are dispersed in the liquid dispersant. The pressure delivery system 220 maintains the materials in dispersion and pressurizes the dispersion, feeding it to an ultrasonic atomizer 235.

The liquid used to create the dispersion can be chosen from among a number of suitable candidates, including methanol, ethanol, and the like. For ultrasonic spray of cubic boron nitride (cBN), we have used ethanol (C₂H₅OH) as the liquid. Ethanol has hydrophilic molecules or polar molecules, which helps to attach cBN particles with hygroscopic characteristics and to keep the particles suspended in the liquid. Other dispersants that are of polar characteristics can also be applied, or applied in combination with surfactants for further uniform dispersion.

An ultrasonic signal generator 240 is connected to a piezoelectric element within the atomizer 235. The piezoelectric element converts the ultrasonic signal into mechanical action that atomizes the liquid dispersion into droplets, which are fed to a nozzle 245. By adjusting the frequency of the ultrasonic signal, the size of the resulting droplets can be adjusted. Higher frequencies produce smaller droplets. For example, in one embodiment a frequency of 125 KHz is used, which produces droplets that have a median size of about 20 microns.

The nozzle directs the droplets toward the substrate or part to be coated, 170. The liquid in the droplets evaporates, either in transit toward the substrate or after deposition on the substrate or a combination of the two. The result is a dry powder deposition of coating material(s) on the substrate. As an option, a gas flow (using air, nitrogen, or other suitable gas) may be introduced around the exit of the nozzle to further direct the droplet spray toward the surface. This can improve the speed of deposition as well as increase the efficiency of material deposition (fraction of material that is deposited on the substrate). The gas may be heated to speed up evaporation of the liquid.

Ultrasonic spray deposition (USD) offers several advantages over electrostatic spray coating (ESC) that make USD more suitable for some applications. Compared to ESC, USD can be used to create thinner coatings. Also, because the coating material is dispersed in a liquid that tends to de-agglomerate the material, and the ultrasonic atomization process itself tends to break up agglomerates, the resulting deposition is more uniform with a smoother surface. We also have found that we are able to create higher density coatings with USD, i.e., the volumetric fraction of coating material in the coating preform can be made higher with USD than with ESC.

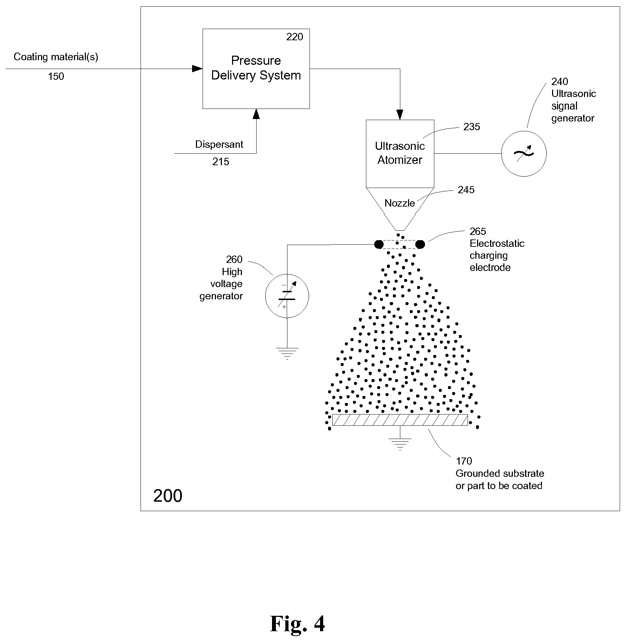

Figure 4 illustrates yet another method of deposition 200 that combines ultrasonic spray deposition with electrostatic charging. Again, coating materials 150 (untreated or pre-treated) and a liquid dispersant 215 are introduced to a pressure delivery system 220. The combination of the ultrasonic atomizer 235, ultrasonic signal generator 240, and nozzle 245 create a spray with droplets of controlled size that are directed toward the substrate 170. As discussed previously, a gas flow also may be introduced to further direct the droplet spray and increase speed and efficiency of deposition.

In this embodiment, the droplets are given an electrostatic charge by positioning one or more conducting electrodes 265 near the exit of the ultrasonic spray nozzle 245. By applying a high voltage to the electrode(s), using an adjustable high voltage generator 260, and grounding the substrate 170 (the substrate must have a surface with a certain conductivity), the droplets exiting the ultrasonic nozzle are charged and follow the electric field lines to the substrate. A variety of shapes and configurations can be used for the electrode, including a circular or elliptical collar, as well as one or more point electrodes arranged near the nozzle exit.

By adjusting the positioning of the nozzle 245, electrode 265 and substrate 170 and adjusting the voltage, electrode-substrate distance, ultrasonic frequency (influencing droplet size) and spray pressure from the pressure delivery system 220, the balance between electrostatic influence and the ultrasonic spray of the droplets can be altered to provide the characteristics needed for a given coating application. Adjusting the voltage level and the distance between the spray nozzle and the substrate can modify the transit time for droplets between nozzle and substrate. As an option, the carrier gas can be heated, affecting the rate at which droplets evaporate during transit. These various adjustments can be used to optimize the process such that the desired balance is achieved between dry deposition (droplets have evaporated prior to reaching the substrate) and wet deposition (droplets are still liquid when they deposit on the surface), allowing all dry, all wet, or hybrid wet/dry deposition to be used depending on what is best for the application.

This approach combines the positive aspects of both ultrasonic spray deposition (USD) and electrostatic charging, which provides several advantages:
- Addition of electrostatic forces to the USD process can help coat 3D surfaces conformally, placing less reliance on line of sight between nozzle and substrate surface;
- Addition of electrostatic forces improves the deposition rate compared to USD alone;
- Electrostatic forces also increase transfer efficiency (fraction of material sprayed that is deposited on the substrate), which increases productivity of deposition and reduces potential environmental effects of undeposited material;
- Electrostatic forces improve coverage of sharp edges, because the electric field lines tend to converge at the edges causing greater buildup of droplets/particles there; and
- Compared to electrostatic spray coating (ESC) alone (see U.S. Patent No. 6,544,599, incorporated herein by reference), combining USD and electrostatic charging provides several of the advantages noted above for ultrasonic spray, namely the ability to create thinner, more dense and more uniform coatings.

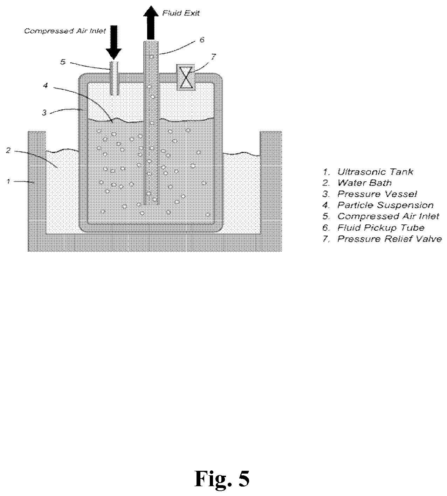

A key part of the pressure delivery system for ultrasonic spray deposition is an ultrasonic tank, which maintains a suspension of particles within a dispersant for delivery to the ultrasonic spray system. Figure 5 illustrates the ultrasonic tank apparatus. A pressure vessel (3) stores the particle suspension (4). An opening with suitable pressure seal (not shown in the figure) is used for initially filling the vessel manually. The vessel also can be filled automatically by providing appropriate feed lines/inlets for liquid dispersant and powder particles, along with suitable metering and automatic controls.

The vessel is pressurized using compressed air, nitrogen or other suitable gas under pressure, which enters the vessel at the compressed air inlet (5). For some applications, maintaining control of the humidity level or dew point of the gas may be required. As an option, the gas can be pre-heated to speed up the removal of the dispersant in the course of deposition. A pressure relief valve (7) is provided as a safety measure to prevent the vessel or other parts of the pressurized assembly from being over-pressurized and potentially leaking or rupturing.

The particle suspension exits the pressure vessel through a fluid pickup tube (6). The distance between the bottom of the fluid pickup tube and the bottom of the pressure vessel can be adjusted to ensure that fluid is drawn from a location within the pressure vessel that has consistent particle density and good suspension. Liquid level indication (not shown in the figure) is provided external to the pressure vessel.

As an option, the ultrasonic tank can employ any of a variety of means for maintaining a uniform dispersion of the particles. For example, in one embodiment shown in the figure, a commercial ultrasonic water bath (1) is used to surround the pressure vessel with sonicated water (2), which imparts ultrasonic vibrations to the pressure vessel and the suspension within. Other examples include use of mechanical vibrators attached to a surrounding bath or to the pressure vessel, an ultrasonic vibrator stick or similar device immersed in the suspension inside the vessel, mechanical stirrers, and other vibration or sonication means.

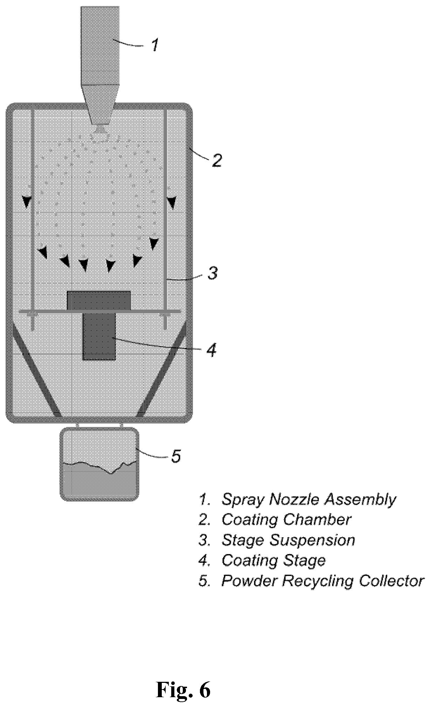

Figure 6 illustrates a deposition chamber that can be used for electrostatic spray coating (ESC), ultrasonic spray deposition (USD), or USD plus electrostatic charging. A spray nozzle assembly (1) is mounted such that it sprays coating material (dry powder or liquid suspension containing particles) into the coating chamber (2). The spray nozzle assembly may employ electrostatic, ultrasonic, or ultrasonic plus electrostatic deposition means. The substrate(s) or part(s) to be coated are placed on a stage (4) that is suspended in the chamber using a stage suspension assembly (3). The orientation of the stage may be fixed or, as an option, a rotating stage may be used as described further herein. The distance between the stage and the spray nozzle can be adjusted.

The chamber is sealed so as to prevent egress of the coating material or ingress of contaminants. Material that is not deposited on the substrate(s) is collected in a powder recycling collector (5) so that material may be recycled. In the preferred embodiment, the unused material exits the sealed chamber via a liquid bath or by other filtering mean so that the material is captured for re-use and is prevented from being released to the environment.

In a preferred embodiment, the adjustments provided on the stage suspension assembly (3) are located external to the chamber by extending the assembly through the top of the chamber through openings that are sealed using O-ring type seals or other sealing means. With this design, adjustments in stage-to-nozzle distance can be made without opening the chamber.

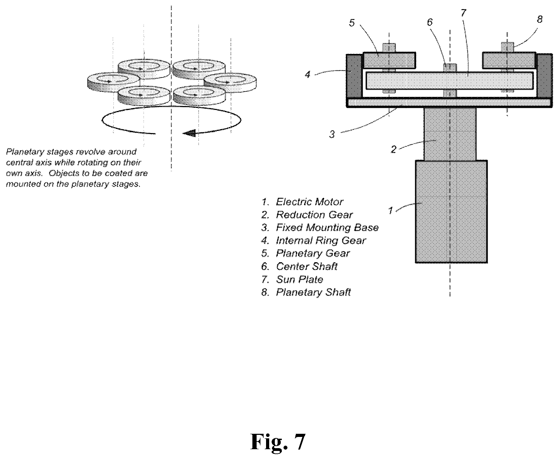

Figure 7 illustrates the rotating stage that is used as an option to improve uniformity of deposition across the surface of the substrate. The rotating stage can be used with electrostatic spray, ultrasonic spray, ultrasonic spray with electrostatic charging, and other deposition methods. An electric motor (1) drives the apparatus through a reduction gear (2), causing the center shaft (6) to rotate. A sun plate (7) is attached to the center shaft (6) and rotates with the shaft. A number of planetary gears (5) are mounted to the sun plate (7) using planetary shafts (8). The planetary gears mesh with an internal ring gear (4) that is mounted to the fixed mounting base (3). In one embodiment shown in the figure, six planetary gears are used.

As the sun plate rotates, the planetary gears move around the central axis of the assembly and, due to their interaction with the internal ring gear, the planetary gears also rotate on their own axes. Substrates are mounted on the individual planetary gear stages. The dual rotation action enhances the uniformity of the deposition on the substrate by ensuring that all points on the surface of the substrate are exposed equally to the material spray.

The planetary and ring gears can mesh using conventional gear teeth, or the planetary gears can be made as rollers that are pressed outward (e.g., by springs) such that the outer edge of each roller contacts the surface of the internal ring gear and friction causes the planetary gears to rotate.

For any type of electrostatic deposition, the planetary gears must be grounded in order to ground the substrate that is mounted on them. This requires that a means be provided to electrically connect the planetary gears to a grounded member. In one embodiment in which the planetary gears are rollers, the springs that press against the planetary gear shafts and hold the planetary gears against the internal ring gear also act as brushes to make an electrical connection between the planetary gears and the rest of the grounded rotating stage assembly.

The speed of the electric motor can be adjusted to ensure that the substrate to be coated is exposed to all parts of the deposition spray pattern equally in order to achieve the desired uniformity of coating. The speed can be adjusted by changing the power input (voltage) to the DC motor. In the specific embodiment shown in the figure, the ratio of the rotational speed of the planetary gears to that of the overall sun plate is fixed by the gear ratio. However, in alternative embodiments one or more additional motors or other means can be provided such that the two speeds can be adjusted independently.

The rotating stage also can be translated by mounting it on an appropriate platform that is moved laterally in either the x or the y direction, and the stage also can be translated in the z-axis direction (vertical direction in the figure), moving the rotating stage closer to or further away from the spray source.

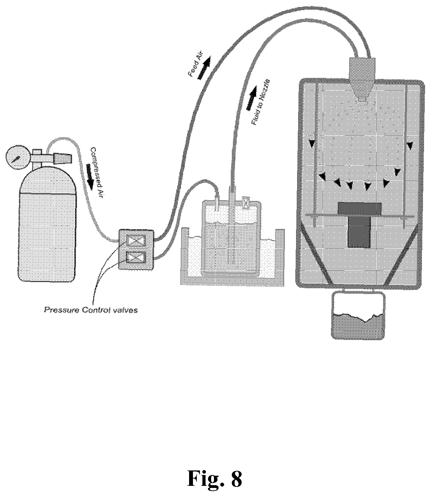

Figure 8 illustrates an integrated ultrasonic spray deposition system. Compressed air, nitrogen or other suitable gas is provided to the pressure delivery system through pressure control valves. One of these valves controls the pressure of gas that is sent to the ultrasonic tank. A liquid suspension of particles exits the pressurized ultrasonic tank and is sent to the ultrasonic spray nozzle assembly. As an option, a second valve is used to control the pressure of gas that is fed to the ultrasonic spray nozzle assembly to further direct the ultrasonic spray to the substrate. The ultrasonic spray nozzle assembly is mounted to the deposition chamber, which is described separately herein.

The same arrangement is used for ultrasonic spray deposition with electrostatic charging. In that case, an electrode and adjustable voltage source are provided and the substrate is grounded to provide electric field-assisted ultrasonic deposition. A commercial high-voltage generator available for ESC systems can be used; however, we have found that some modification is required for this application, namely modifying the voltage generator so that it can be applied to dispersants that have widely different dielectric constants.

Other optional features that can be included in the system described here are:
- Pre-heating of the carrier gas or liquid, when desired for specific applications;
- Automation of the material feeds, gas and liquid dispersion flows, temperatures, and rotation/translation of the substrate, and automatic measurements of feed and deposition rates, temperatures and other key variables;
- Additional translation (in the x, y and/or z directions) of the substrate or ultrasonic nozzle (with or without electrostatic charging) or both, to allow deposition on large surfaces; and
- Use of multiple nozzles to allow coating large surfaces or complex geometries.

A method for coating a substrate with a deposition material comprises the steps of:
(a) atomizing the deposition material by means of an ultrasonic signal;
(b) directing the deposition material onto the substrate; and
(c) applying one of an in situ and post-deposition treatment to the substrate whereby the deposition material is bound to the substrate.

The deposition material may comprise at least one of the set of carbides, nitrides, carbonitrides, borides, oxides, sulfides, and silicides.

The deposition material may comprise boron nitride.

Said step of applying a post-deposition treatment may comprise chemical vapor infiltration.

Said step of chemical vapor infiltration may comprise the step of applying titanium nitride to the substrate.

Said step of applying a post-deposition treatment may comprise chemical vapor deposition.

Said step of applying a post-deposition treatment may comprise sintering.

Said sintering step may comprise at least one of the set of microwave sintering, laser sintering, and infrared sintering.

The method may further comprise the step of directing an agent material to the substrate subsequent to the step of applying one of an in situ and post-deposition treatment.

The agent material may comprise an active biological agent.

The active biological agent may comprise one of a biocidal and anti-bacterial agent.

The agent material may comprise a bone-morphogenic protein.

The agent material may comprise a drug-carrying agent.

The step of directing the deposition material onto the substrate step may utilize a nozzle, and may further comprise the step of directing a gas flow adjacent to the nozzle and toward the substrate.

The method may further comprise the step of heating the gas flow.

The method may further comprise the step of dispersing the deposition material in a liquid prior to said step of atomizing the deposition material.

The liquid may comprise an alcohol.

The alcohol may comprise one of methanol and ethanol.

The liquid may comprise a polar compound.

The deposition material may comprise micro-sized particles.

The deposition material may comprise nano-sized particles.

The method may further comprise the step of electrostatically charging the deposition material.

The method may further comprise the step of manipulating the substrate during said step of directing the deposition material onto the substrate.

Said manipulating the substrate step may comprise the step of rotating the substrate on a stage.

The substrate may comprise a complex geometry.

The method may further comprise the step of treating the deposition material prior to said step of atomizing the deposition material.

Said treating the deposition material step may comprise the step of coating the deposition material with at least one of a functionalization material and a protective material.

The deposition material may be non-conducting.

Said step of applying a post-deposition treatment to the substrate may comprise the step of applying a high temperature - high pressure treatment to the substrate.

## Claims

1. A method for coating a grounded substrate with a deposition material, including the steps of:
(a) dispersing the deposition material in a liquid (215);
(b) atomizing the deposition material (150) by means of an ultrasonic signal;
(b) electrostatically charging the deposition material (150);
(c) directing the deposition material onto the grounded substrate (170); and
(d) applying an *in situ* treatment or a post-deposition treatment (300) to the grounded substrate whereby the deposition material is bound to the grounded substrate (370).

2. A method as claimed in claim 1, wherein the grounded substrate includes a three-dimensional surface and the step of directing the deposition material onto the grounded substrate coats the three-dimensional surface conformally.

3. A method as claimed in claim 2, including manipulating the grounded substrate (170) during the step of directing the deposition material (150) onto the grounded substrate, optionally wherein manipulating the grounded substrate includes rotating the grounded substrate on a stage and/or wherein the grounded substrate includes a complex geometry.

4. A method as claimed in claim 1, wherein the deposition material (150) includes at least one of carbides, nitrides, carbonitrides, borides, oxides, sulphides or silicides.

5. A method as claimed in claim 1, wherein the step of applying a post-deposition treatment (300) includes chemical vapour infiltration or chemical vapour deposition.

6. A method as claimed in claim 5, wherein the chemical vapour infiltration includes the step of applying titanium nitride to the grounded substrate.

7. A method as claimed in claim 1, wherein the step of applying a post-deposition treatment (300) includes sintering, optionally wherein the sintering step includes at least one of microwave sintering, laser sintering, and/or infrared sintering.

8. A method as claimed in claim 1, including the step of directing an agent material to the grounded substrate subsequent to the step of applying an *in situ* treatment or a post-deposition treatment, optionally wherein the agent material includes an active biological agent, optionally wherein the active biological agent includes a biocidal and/or an anti-bacterial agent, or wherein the agent material includes a bone-morphogenic protein or a drug-carrying agent.

9. A method as claimed in claim 1, wherein directing the deposition material (150) onto the grounded substrate (170) utilizes a nozzle (245), and includes the step of directing a gas flow adjacent to the nozzle and toward the grounded substrate.

10. A method as claimed in claim 9, wherein the gas flow adjacent to the nozzle (245) is heated to speed the evaporation of the liquid (215) in transit to the grounded substrate (170).

11. A method as claimed in claim 10, wherein the gas flow is heated sufficiently to evaporate all of the liquid (215) while in transit towards the grounded substrate (170).

12. A method as claimed in claim 10, wherein the liquid (215) includes an alcohol, such as methanol or ethanol, or wherein the liquid includes a polar compound.

13. A method as claimed in claim 1, wherein the deposition material (150) comprises micro-sized particles or nano-sized particles.

14. A method as claimed in claim 1, including the step of treating the deposition material (150) prior to atomizing the deposition material, optionally wherein treating the deposition material includes coating the deposition material with a functionalization material and/or a protective material.

15. A method as claimed in claim 1, wherein the step of applying a post-deposition treatment (300) to the grounded substrate (270) includes the step of applying a high temperature - high pressure treatment to the grounded substrate (170).
